# FASCICULE DE BREVET EUROPEEN

(11) **EP 1 365 856 B1**
(45) Date de publication et mention de la délivrance du brevet: **27.07.2011**
(21) Numéro de dépôt: 02704806.5
(22) Date de dépôt: 12.02.2002
(51) Int. Cl.: B01J 2/00, B01J 2/30, C01G 3/02

(54) **PREPARATION DE PARTICULES COMPRENANT UN ION METALLIQUE**
HERSTELLUNG VON METALLION ENTHALTENDEN TEILCHEN
PREPARATION OF PARTICLES CONTAINING A METAL ION

(30) Priorité: 12.02.2001 US 781475
(43) Date de publication de la demande: 03.12.2003
(73) Titulaire: RHODIA CHIMIE, 92512 Boulogne Billancourt Cedex (FR)
(72) Inventeur: ANTHONY, Olivier, F-95880 ENGHIEN LES BAINS (FR); GERARDIN, Corine, F-34680 SAINT GEORGES D'ORQUES (FR); CADENA, Nathalie, UNION CITY, NJ 07087 (US); LABEAU, Marie-Pierre, F-92300 LEVALLOIS-PERRET (FR)
(86) Numéro de dépôt international: PCT/FR2002/000528
(87) Numéro de publication internationale: WO 2002/064245

(56) Documents cités:
- EP-A- 0 395 243
- WO-A-00/10913
- WO-A-01/94263
- US-A- 5 998 523

## Description

La présente invention a pour objet un procédé de préparation de particules minérales par hydrolyse d'un composé comprenant un ou plusieurs cations métalliques, ainsi que les particules ainsi obtenues.

On utilise dans de nombreux domaines, des composés sous forme de solides divisés, que ces derniers le soit sous forme sèche, bien encore sous forme de dispersions. C'est par exemple le cas dans le domaine des formulations phytosanitaires où certains pesticides se trouvent être des particules minérales, comme l'hydroxyde de cuivre, fongicide, qui entre dans la composition de la "bouillie bordelaise". Toujours dans ce domaine, les formulations phytosanitaires peuvent comprendre des éléments nutritifs, sous la forme de métaux. On peut trouver aussi le cas dans le domaine des pigments, qui mettent en oeuvre des oxydes ou hydroxydes de terres-rares.

L'un des problèmes rencontrés est de pouvoir disposer de particules comprenant un métal ou plusieurs, qui soient stables chimiquement lorsqu'elles se trouvent sous forme de poudre, mais qui le restent lorsqu'elles se trouvent sous la forme de dispersion. A ce titre, il est intéressant de citer à nouveau le cas du cuivre. Ainsi, la difficulté avec ce composé est que l'hydroxyde, tout d'abord est relativement difficile à remettre en dispersion. Mais de plus, il présente l'inconvénient de n'être pas stable chimiquement dans le temps. En effet, l'hydroxyde de cuivre se déshydrate plus ou moins rapidement en oxyde de cuivre. Par ailleurs, le contrôle exercé sur la croissance des particules d'hydroxyde de cuivre, lors de sa synthèse, est loin d'être efficace. Par conséquent, la distribution des tailles de particules est très étalée, ce qui peut représenter un inconvénient lors de l'utilisation desdites particules. C'est l'une des raisons pour lesquelles la "bouillie bordelaise" est très souvent vendue dans le commerce sous la forme de poudre et non de suspension ; les poudres pouvant être stockées.

Le document EP-A-0395243 décrit un procédé de préparation de particules minérales par complexation d'un précurseur a l'aide d'un polymére.

Les particules doivent de même être en mesure de pouvoir se disperser aisément, de former des dispersions suffisamment stables, notamment qui ne décantent pas au stockage ou lors de leur utilisation.

La présente invention a pour objet de proposer des particules sous forme sèche ou dispersée, qui soient stables chimiquement sous ces deux mises en formes, qui soient facilement dispersables en milieu aqueux, et qui donnent accès à des dispersions ne décantant pas au stockage.

Ces buts et d'autres sont atteints par la présente invention qui a pour premier objet un procédé de préparation de particules comprenant au moins un ion métallique, dans lequel on met en oeuvre les étapes suivantes :
a) on met en solution ou en dispersion aqueuse au moins un précurseur comprenant au moins un cation métallique ;
b) on effectue éventuellement une hydrolyse partielle dudit précurseur,
c) on met en contact le précurseur issu de l'étape a) ou le précurseur éventuellement hydrolysé issu de l'étape b), avec au moins un copolymère peigne hydrosoluble comportant soit un squelette anionique complexant et des chaînes latérales hydrophiles stabilisantes, soit un squelette hydrophile neutre stabilisant et des chaînes latérales anioniques complexantes, soit au moins l'un des deux copolymères précités, associé à au moins un polymère hydrophile anionique complexant ;
d) On effectue une hydrolyse partielle ou totale du produit obtenu lors de l'étape c).

La présente invention a de même pour objet les particules susceptibles d'être obtenues en mettant en oeuvre le procédé selon l'invention et dont la taille moyenne est comprise entre 2 et 500 nm.

L'un des avantages de la présente invention est que le procédé permet de contrôler efficacement la croissance des particules.

Par ailleurs, du fait de leur procédé de préparation, les particules obtenues sont aisément redispersables. En effet, le revêtement polymérique qu'elles présentent a pour conséquence de faciliter la remise en suspension desdites particules.

Mais d'autres avantages et caractéristiques de la présente invention apparaîtront plus clairement à la lecture de la description et des exemples qui vont suivre.

Ainsi que cela a été indiqué auparavant, la présente invention a tout d'abord pour objet un procédé de préparation de particules comprenant au moins un ion métallique, comprenant les étapes suivantes :
a) on met en solution ou dispersion aqueuse au moins un précurseur comprenant un cation métallique ;
b) on effectue éventuellement une hydrolyse partielle dudit précurseur,
c) on met en contact le précurseur issu de l'étape a) ou le précurseur éventuellement hydrolysé issu de l'étape b), avec au moins un copolymère peigne hydrosoluble comportant soit un squelette anionique complexant et des chaines latérales hydrophiles stabilisantes, soit un squelette hydrophile neutre stabilisant et des chaînes latérales anioniques complexantes, soit au moins l'un des deux copolymères précités, associé à au moins un polymère hydrophile anionique complexant ;
d) On effectue une hydrolyse partielle ou totale du produit obtenu lors de l'étape c).

Tout d'abord, le précurseur comprend au moins un cation métallique qui est plus particulièrement choisi parmi les métaux des colonnes IIIA, IVA, VIII, IB, IIB, IIIB et VB de la classification périodique, les lanthanides, les actinides. Il est précisé que la classification périodique est celle parue au bulletin de sociétés chimiques de France de janvier 1966.

Selon un mode de réalisation particulier de l'invention, le cation métallique est choisi parmi le titane, le fer, le cobalt, le nickel, le cuivre, l'aluminium, le zinc, l'or, l'argent, le platine, le cérium, le lanthane, l'yttrium, l'iridium, le ruthénium, le rhodium, l'osmium, le palladium. Ces cations étant présents seuls ou en mélanges. Notons qu'il n'est pas impossible de mettre en oeuvre un ou plusieurs précurseurs mixtes et/ou un mélange de plusieurs précurseurs ne comprenant qu'un cation.

Une première variante de l'invention consiste à mettre en oeuvre le précurseur sous la forme d'une solution aqueuse. Dans un tel cas, le précurseur est utilisé sous la forme d'un sel hydrosoluble. De préférence, ledit sel est choisi parmi les nitrates, les sulfates, les chlorures, les phosphates, ou leurs mélanges. On peut également choisir le ou les sels parmi les complexants non polymériques comme les citrates, les lactates ou leurs mélanges.

Une deuxième variante de l'invention, consiste à mettre en oeuvre ledit précurseur sous la forme d'une suspension aqueuse. De préférence, lesdites particules sont des solides en suspension. Selon cette variante, le précurseur peut être constitué de particules, d'agrégats de particules, ou encore de leur combinaison.

Selon un mode de réalisation avantageux de la présente invention, les particules ou les agrégats de particules ont une taille moyenne inférieure ou égale à 100 nm, plus particulièrement comprise entre 2 et 100 nm, et de préférence comprise entre 2 et 90 nm. La taille moyenne des particules/agrégats est mesurée par diffusion dynamique de la lumière.

En outre, ces particules et/ou agrégats de particules comprennent plus particulièrement un hydroxyde, un oxohydroxyde, un sel hydrosoluble partiellement hydrolysé de cation métallique, seuls ou en mélanges, éventuellement combiné(s) à un oxyde de cation métallique. Là encore diverses possibilités sont envisageables, depuis la présence d'un cation métallique présent sous une forme, à la présence de plusieurs cations sous des formes différentes.

De telles particules peuvent être obtenues en mettant en oeuvre des procédés connus de l'homme du métier.

Le milieu aqueux dans lequel les sels ou particules, agrégats de particules, sels hydrosolubles, ou leurs combinaisons, est, de préférence, de l'eau. Il est à noter qu'il est envisageable de mettre en oeuvre un milieu aqueux comprenant au moins un solvant miscible à l'eau. A titre illustratif, on peut citer notamment les alcools courts (c'est-à-dire comprenant un radical hydrocarboné en C₁-C₄) comme l'éthanol ou l'alcool isopropylique

Une fois la mise en suspension/solution effectuée, un mode de réalisation particulièrement avantageux de la présente invention consiste à mettre en oeuvre une hydrolyse partielle du précurseur.

Généralement, cette hydrolyse, si elle est effectuée, est réalisée en présence d'une base choisie parmi les hydroxydes de métaux alcalins ou alcalino-terreux et l'ammoniaque.

Avantageusement, la base est choisie plus particulièrement parmi l'hydroxyde de sodium, l'hydroxyde de potassium, l'hydroxyde de calcium, l'ammoniaque, seuls ou en mélanges.

Cette hydrolyse partielle est en général mise en oeuvre en ajoutant dans la solution/dispersion, la base neutralisante.

Les teneurs de base employée seront détaillées par la suite.

Cette opération, lorsqu'elle a lieu, est, de manière classique effectuée sous agitation.

Selon une caractéristique importante du procédé de l'invention, on met ensuite en contact le précurseur obtenu après la mise en solution / dispersion décrite lors de l'étape a), ou le précurseur partiellement hydrolysé issu de l'étape b), avec au moins un copolymère peigne hydrosoluble comportant soit un squelette anionique complexant et des chaînes latérales hydrophiles stabilisantes, soit un squelette hydrophile neutre stabilisant et des chaînes latérales anioniques complexantes, soit au moins l'un des deux copolymères précités, associé à au moins un polymère hydrophile anionique complexant.

Il est fait remarquer que le terme complexant ne couvre pas seulement une complexation au sens strict (partage d'orbitales électroniques) mais il entend couvrir aussi des liaisons de type ioniques.

De manière particulièrement avantageuse, le polymère mis en oeuvre lors de l'étape c) présente une masse moléculaire en poids (Mw) comprise entre 2000 et 5.105 g/mol, de préférence comprise entre 3000 et 105 g/mole. La masse molaire en poids est habituellement mesurée par chromatographie par perméation de gel (GPC - étalon polyéthylène glycol).

Selon un mode de réalisation avantageux de la présente invention, les polymères, qu'ils soient des copolymères peignes ou des polymères hydrophiles, mis en oeuvre dans le procédé selon l'invention, sont choisis parmi les polymères qui donnent une solution transparente dans l'eau à la température de mise en oeuvre la plus basse du procédé à laquelle est soumise ledit polymère (ou lesdits polymères peigne et hydrophile) ; la teneur pondérale en polymère(s) dans la solution étant de 50 % en poids.

Un premier mode de réalisation de l'invention consiste à utiliser au moins un copolymère peigne hydrosoluble comportant un squelette anionique complexant et des chaînes latérales hydrophiles stabilisantes, qui sont de préférence des chaînes hydrophiles non ioniques. Selon un mode préféré de réalisation de l'invention, le copolymère peigne hydrosoluble comporte un squelette hydrophile anionique complexant.

De préférence on utilise un copolymère comportant une fraction en poids de chaînes latérales hydrophiles non ioniques plus grande que la fraction en poids de monomère ionique complexant.

Le squelette anionique complexant est plus particulièrement obtenu à partir de monomères choisis parmi :
- les acides mono- ou poly- carboxyliques linéaires, ramifiés, cycliques ou aromatiques, comprenant au moins une insaturation éthylénique, et au moins 3 à 10 atomes de carbone ; les dérivés N-substitués de tels acides ; les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
   seuls ou en mélanges, leurs précurseurs, leurs homologues sulfoniques ou phosphoniques, phosphoriques ainsi que les macromonomères dérivant de tels monomères ; les monomères ou macromonomères pouvant être sous la forme de sels.

A titre d'exemples de monomères anioniques, on peut citer sans intention de s'y limiter :
- l'acide acrylique, l'acide méthacrylique, l'acide fumarique, l'acide itaconique, l'acide citraconique, l'acide maléique, l'acide acrylamido glycolique, l'acide 2-propène 1-sulfonique, l'acide méthallyl sulfonique, l'acide styrène sulfonique, l'acide α-acrylamido méthylpropane sulfonique, le 2-sulfoéthylène méthacylate, l'acide sulfopropyl (méth)acrylique, l'acide bis-sulfopropyl acrylique, l'acide bis-sulfopropyl méthacrylique, l'acide sulfatoéthyl méthacrylique, le monoester phosphate d'acide hydroxyéthyl méthacrylique, ainsi que les sels de métal alcalin, comme le sodium, le potassium, ou d'ammonium ;
- l'acide vinyl sulfonique, l'acide vinylbenzène sulfonique, l'acide vinyl phosphonique, l'acide vinylidène phosphorique, l'acide vinyl benzoïque, ainsi que les sels de métal alcalin, comme le sodium, le potassium, ou d'ammonium ;
- le N-méthacryloyl alanine, le N-acryloyl-hydroxy-glycine ;
   seuls ou en mélanges, ainsi que les macromonomères dérivant de tels monomères.

Il est à noter, comme indiqué auparavant, que l'on ne sortirait pas du cadre de la présente invention en mettant en oeuvre des monomères précurseurs de ceux qui viennent d'être cités. En d'autres termes, ces monomères présentent des motifs qui, une fois incorporés dans la chaîne polymère, peuvent être transformés, notamment par un traitement chimique tel que l'hydrolyse, pour redonner les espèces anioniques précitées. Par exemple, les monomères totalement ou partiellement estérifiés des monomères précités peuvent être mis en oeuvre pour être, par la suite, hydrolysés totalement ou en partie. Il s'agit par exemple de (méth)acrylate de terbutyle, entre autres.

De préférence, le squelette est obtenu à partir de monomères choisis parmi les monoacides carboxyliques insaturés, les polyacides carboxyliques insaturés ou leur forme anhydride, les acides sulfoniques insaturés.

Il est possible d'utiliser en plus des monomères anioniques cités ci-dessus des monomères non ioniques hydrosolubles :
- l'oxyde d'éthylène ;
- les amides des acides mono- ou poly- carboxyliques, linéaires, ramifiés, cycliques ou aromatiques, comprenant au moins une insaturation éthylénique ou dérivés ;
- les esters hydrophiles dérivant de l'acide (méth)acrylique ;
- les esters vinyliques permettant d'obtenir des blocs alcool polyvinylique après hydrolyse, la vinylpyrrolidone ;
- les sucres et leurs esters vinyliques ;
   seuls ou en mélanges ainsi que les macromonomères dérivant de tels monomères.

A titre d'exemples plus particuliers, on peut citer entre autres l'oxyde d'éthylène ; les amides des acides mono- ou poly- carboxyliques, linéaires, ramifiés, cycliques ou aromatiques, comprenant au moins une insaturation éthylénique ou dérivés, comme le (méth)acrylamide, le N-méthylol (méth)acrylamide ; les esters hydrophiles dérivant de l'acide (méth)acrylique comme par exemple le (méth)acrylate de 2-hydroxyéthyle ; les esters vinyliques permettant d'obtenir des blocs alcool polyvinylique après hydrolyse, comme l'acétate de vinyle, le Versatate^{®} de vinyle, le propionate de vinyle ; la vinylpyrrolidone ; les monomères du type des sucres comme les osides, les polyholosides fortement dépolymérisés ainsi que les esters vinyliques de tels composés.

Par fortement dépolymérisés, on entend des composés dont la masse moléculaire en poids est plus particulièrement inférieure à 20000 g/mole.

Les osides sont des composés qui résultent de la condensation, avec élimination d'eau, de molécules d'oses entre elles ou encore de molécules d'oses avec des molécules non glucidiques. Parmi les osides on préfère les holosides qui sont formés par la réunion de motifs exclusivement glucidiques et plus particulièrement les oligoholosides (ou oligosaccharides) qui ne comportent qu'un nombre restreint de ces motifs, c'est-à-dire un nombre en général inférieur ou égal à 10. A titre d'exemples d'oligoholosides on peut mentionner le saccharose, le lactose, la cellobiose, le maltose.

Les polyholosides (ou polysaccharides) fortement dépolymérisés convenables sont décrits par exemple dans l'ouvrage de P. ARNAUD intitulé "cours de chimie organique", GAUTHIER-VILLARS éditeurs, 1987. A titre d'exemple non limitatif de polyholosides fortement dépolymérisés, on peut citer le dextran, l'amidon.

De tels monomères peuvent être utilisés seuls ou en mélanges, ainsi que sous la forme de macromonomères.

Il n'est pas non plus exclu de mettre en oeuvre des monomères hydrophobes.

Toutefois, si ce type de monomères est présent, leurs proportions sont telles que le copolymère peigne, éventuellement combiné au polymère hydrophile, forme une solution transparente à 50 % en poids dans l'eau, à la température la plus basse du procédé à laquelle est soumis ledit copolymère peigne, éventuellement combiné au polymère hydrophile.

Parmi les monomères hydrophobes utilisables, on peut citer par exemple :
- les esters des acides mono- ou poly- carboxyliques, linéaires, ramifiés, cycliques ou aromatiques, comprenant au moins une insaturation éthylénique,
- les dérivés de l'acrylamide tels que les N-alkyl ou N,N-dialkyl acrylamides, les N-alkyl ou N,N-dialkyl méthacrylamides ;
- les nitriles αβ-éthyléniquement insaturés, les éthers vinyliques, les esters vinyliques, les monomères vinylaromatiques, les halogénures de vinyle ou de vinylidène,
- les monomères hydrocarbonés, linéaires ou ramifiés, aromatiques ou non, comprenant au moins une insaturation éthylénique, éventuellement substitués par un atome d'halogène, plus particulièrement comprenant 2 à 12 atomes de carbone,
- l'oxyde de propylène, l'oxyde de butylène ;
   seuls ou en mélanges, ainsi que les macromonomères dérivant de tels monomères.

A titre d'exemples particuliers de monomères hydrophobes, on peut citer :
- les esters d'acide (méth)acrylique avec un alcool comprenant 1 à 12 atomes de carbone comme le (méth)acrylate de méthyle, le (méth)acrylate d'éthyle, le (méth)acrylate de propyle, le (méth)acrylate de n-butyle, le (méth)acrylate de t-butyle, le (méth)acrylate d'isobutyle, l'acrylate de 2-éthylhexyl ;
- l'acétate de vinyle, le Versatate^{®} de vinyle, le propionate de vinyle, le vinyltoluène, le styrène, l'α-méthylstyrène, le chlorure de vinyle, le chlorure de vinylidène, le méthyl vinyléther, l'éthyl vinyléther ;
- les nitriles vinyliques incluent plus particulièrement ceux ayant de 3 à 12 atomes de carbone, comme en particulier l'acrylonitrile et le méthacrylonitrile ;
- le butadiène, l'isobutylène, le diisobutylène, le chloroprène, l'isoprène ;
- l'oxyde de propylène, l'oxyde de butylène ;
   seuls ou en mélanges, ainsi que les macromonomères dérivant de tels monomères.

Les monomères formant les chaînes latérales non ioniques sont plus particulièrement choisis parmi des espèces macromonomères. Il est rappelé que, au sens de la présente invention, un macromonomère désigne une macromolécule portant une ou plusieurs fonctions éthyléniques polymérisables par voie radicalaire.

A titre d'exemple, on peut citer les macromonomères de type (méth)acrylate de poly(éthylène glycol), (méth)acrylate d'alcool polyvinylique, (méth)acrylate de poly(hydroxy (C₁-C₄)-alkyl (méth)acrylate), (méth)acrylate de poly(N-méthylol acrylamide), (méth)acrylate de poly((méth)acrylamide).

Ces macromonomères peuvent notamment être obtenus entre autres par transestérification de l'acrylate (ou du méthacrylate) de méthyle ou de l'anhydride (méth)acrylique ou du chlorure d'acryloyle ou de méthacryloyle. Ils peuvent aussi être obtenus par estérification directe de l'acide acrylique ou méthacrylique.

Certains macromonomères peuvent aussi être obtenus par télomerisation comme ceux du type des (méth)acrylate de poly((méth)acrylamide).

Les monomères formant les chaînes latérales non ioniques préférés dans le cadre de la présente invention sont les méthacrylates de poly(éthylène glycol).

Selon un mode de réalisation préféré, les chaînes latérales non ioniques présentent une masse molaire en nombre de poly(éthylène glycol) comprise entre 200 et 10000 g/mol, de préférence entre 300 et 2000 g/mol.

Un deuxième mode de réalisation de l'invention consiste à utiliser un copolymère comprenant un squelette hydrophile neutre stabilisant et des chaînes latérales anioniques complexantes.

Selon un mode de réalisation préféré, le copolymère peigne hydrosoluble comporte des chaînes latérales hydrophiles anioniques complexantes.

Avantageusement, le squelette hydrophile neutre est obtenu à partir d'oxyde d'éthylène et peut se présenter sous la forme d'un oligomère ou d'un polymère.

Quant aux chaînes latérales, elles peuvent être obtenues à partir des monomères anioniques cités auparavant. On pourra se référer aux listes de monomères de ce type données dans le cadre du premier mode de réalisation. De préférence, les monomères mis en oeuvre sont choisis parmi les acides carboxyliques insaturés, les polyacides carboxyliques ou leur forme anhydride, les acides sulfoniques insaturés.

On ne sortirait pas du cadre de ce deuxième mode de réalisation en incorporant parmi les monomères, des monomères hydrophobes ou des monomères non ioniques hydrosolubles, comme notamment ceux indiqués auparavant, dans le cadre de la variante précédente.

Ainsi, on peut incorporer des monomères du type des esters d'acides carboxyliques insaturés, éventuellement substitué, comme les (méth)acrylates d'alkyle ou d'hydroxyalkyle, les (méth)acrylates de glycidyle, les (méth)acrylates de sulfopropyle, l'acétate de vinyle.

De même, on peut incorporer des monomères hydrocarbonés, linéaires ou ramifiés, comprenant au moins une double liaison carbone-carbone, en C₂-C₁₂, des monomères vinylaromatiques, des nitriles αβ-éthyléniquement insaturés, des amides αβ- éthyléniquement insaturés, les éthers vinyliques, la N-vinylpyrrolidone, etc.

Notons que si ces types de monomères sont présents, leurs proportions sont telles que le copolymère peigne, éventuellement combiné au polymère hydrophile, forme une solution transparente à 50 % en poids dans l'eau, à la température la plus basse du procédé à laquelle est soumis ledit copolymère peigne, éventuellement combiné au polymère hydrophile.

Selon un troisième mode de réalisation de l'invention, on met en oeuvre au moins l'un des deux copolymères précités, associé à au moins un polymère hydrophile anionique complexant.

Ce polymère peut être obtenu plus particulièrement par polymérisation d'au moins un monomère anionique, choisi parmi ceux listés dans le cadre de la première variante, auxquels on pourra se référer.

De manière avantageuse, le ou les monomères anioniques sont choisis parmi les acides carboxyliques insaturés, les polyacides carboxyliques ou leur forme anhydride, les acides sulfoniques insaturés.

Ledit polymère peut être un homopolymère ou un copolymère dont la répartition des monomères est statistique.

La préparation de ce type de polymères est parfaitement connue de l'homme de l'art. Elle a lieu de façon radicalaire, en phase aqueuse, en mettant en oeuvre des amorceurs classiques dans le domaine (par exemple l'azo bis(acide cyanovalerique), l'azo bis(hydroclorure de methylpropionamide)).

Plus particulièrement, la masse molaire en poids du polymère (Mw) comprise entre 2000 et 5.10⁵g/mol, de préférence comprise entre 3000 et 10⁵ g/mole. La masse molaire en poids est habituellement mesurée par GPC (étalon polyéthylène glycol).

Selon une variante avantageuse de l'invention, la masse molaire en poids du polymère est inférieure ou égale à celle du copolymère peigne auquel il est associé.

Par ailleurs, selon un mode de réalisation préféré de l'invention, ledit polymère est hydrosoluble. Plus précisément, il forme une solution transparente à 10% en poids dans l'eau, à la température la plus basse du procédé à laquelle est soumis ledit polymère hydrosoluble. Enfin, il forme aussi une solution transparente dans l'eau, dans les mêmes conditions de température, lorsqu'il est combiné au copolymère peigne.

Dans le cadre de cette variante particulière de l'invention, la teneur en polymère par rapport à celle du copolymère peigne auquel il est associé est comprise entre 1 % et 1000%.

Les polymères peignes des premier et deuxième modes de réalisation de l'invention, qui viennent d'être décrits, sont bien connus de l'homme du métier. Ils peuvent être obtenus par diverses méthodes, comme par exemple une copolymérisation d'un monomère de type anionique avec un monomère ou un macromonomère non ionique, ou bien encore par polymérisation d'un monomère de type anionique suivie d'un greffage de chaînes non ioniques.

Le greffage des segments polymériques latéraux sur un segment polymérique squelette peut être effectué selon des techniques classiques et familières à l'homme de l'art (European Polymer Journal 4, 343 (1968) par exemple).

Parmi ces techniques classiques, on peut notamment citer celles dites de greffage direct et polymérisation.

Le greffage direct consiste à polymériser le(s) monomère(s) choisi(s) par voie radicalaire, en présence du polymère sélectionné pour former le squelette du produit final. Si le couple monomère/squelette ainsi que les conditions opératoires, sont judicieusement choisis, alors il peut y avoir réaction de transfert entre le macroradical en croissance et le squelette. Cette réaction créé un radical sur le squelette et c'est à partir de ce radical que croît le greffon. Le radical primaire issu de l'amorceur peut également contribuer aux réactions de transfert.

Pour sa part, la copolymérisation met en oeuvre dans un premier temps le greffage à l'extrémité du segment non ionique d'une fonction polymérisable par voie radicalaire. Ce greffage peut être réalisé par des méthodes usuelles de chimie organique. Puis, dans un second temps, le macromonomère ainsi obtenu est polymérisé avec le monomère choisi pour former le squelette et on obtient un polymère dit "peigne".

Il est évident pour l'homme de l'art que lorsque l'on polymérise un macromonomère et un monomère choisis de telle sorte que ces deux espèces s'associent fortement par liaisons hydrogène, alors il y a simultanément greffage direct sur le segment polymérique du macromonomère et incorporation de ce macromonomère dans la chaîne polymère par simple polymérisation de son extrémité polymérisable. Dans ce cas, la structure obtenue est sensiblement plus branchée ou même réticulée que dans les deux cas précédents.

Quelle que soit la méthode choisie, la polymérisation et le greffage ont lieu de préférence en phase aqueuse.

Elle est en outre de manière avantageuse réalisée en présence d'un amorceur de polymérisation, de préférence hydrosoluble. Ce dernier peut notamment être choisi parmi les peroxydes tels que les persulfates de métaux alcalins ou d'ammonium, l'azo bis(acide cyanovalerique), l'azo bis(hydroclorure de methylpropionamide), etc.

Dans le cas de polymères qui présentent un squelette non ionique et des chaînes latérales anioniques; on peut procéder par exemple par polymérisation radicalaire, de préférence en phase aqueuse également, des monomères de type anioniques, desquels dérivent les greffons, avec un oligomère ou polymère dérivant de l'oxyde d'éthylène.

L'opération de polymérisation est effectuée en présence d'un amorceur de polymérisation qui est de préférence hydrosoluble. Parmi les amorceurs envisageables, on peut citer à titre d'exemples, les peroxydes tels que les persulfates de métaux alcalins ou d'ammonium, les amorceurs de type azoïques comme le 2,2'-azobis[2-méthyl-N-(2-hydroyéthyl)propionamide], l'acide 4,4'-azobis(4-cyanovalérique) ou encore les systèmes rédox à base d'oxydant comme l'eau oxygénée, les persulfates de métaux alcalins, et de réducteurs tels que les bisulfites de métaux alcalins.

La température à laquelle est effectuée la polymérisation peut varier dans de larges limites. A titre illustratif, la réaction est mise en oeuvre entre 60 et 100°C.

L'étape c), correspondant à la mise en contact de la solution / dispersion obtenue après l'étape a) ou b), et du copolymère est effectuée de préférence sous agitation.

La quantité de copolymère, éventuellement associé à l'homopolymère, est telle que le rapport molaire entre le groupe complexant de la ou des parties hydrophile(s) anionique(s) complexant(es) et le nombre de mole du cation métallique contenu dans le précurseur est de manière avantageuse compris entre 0,05 et 10, plus particulièrement compris entre 0,1 et 1. Il est à remarquer que d'une manière générale, plus ce rapport molaire est élevé, plus la taille des particules obtenues à l'issue du procédé selon l'invention, est petite.

Une fois l'homogénéisation faite, on met en oeuvre une étape d'hydrolyse (étape d)).

Cette étape consiste à mettre en contact une base avec le mélange obtenu à l'étape précédente. Plus particulièrement, la base est ajoutée au mélange de l'étape d), de préférence, sous agitation.

Généralement, l'hydrolyse de l'étape d), est, elle aussi, effectuée en présence d'une base choisie parmi les hydroxydes de métaux alcalins ou alcalino-terreux et l'ammoniaque. De préférence, la base est choisie parmi les hydroxydes de sodium, de potassium, de calcium, l'ammoniaque, seuls ou en mélange.

Il est à noter, et cela constitue un avantage supplémentaire du procédé selon l'invention, que l'hydrolyse mis en oeuvre lors de cette étape d) peut conduire à l'obtention d'un composé totalement hydrolysé ou non. En effet, il peut être avantageux dans certains domaines d'applications, de disposer de particules qui ne sont pas totalement hydrolysées.

Dans le cas où l'hydrolyse est totale, en d'autres termes, lorsque la quantité totale de base introduite lors des étapes b) (si elle a lieu) et d) correspond au moins à la charge du ou des cations métalliques, les particules résultantes comprennent un oxyde, hydroxyde et/ou oxohydroxyde.

Habituellement, la quantité de base mise en oeuvre lors de l'étape b) si elle a lieu, et lors de l'étape d) correspond à 50 à 130 % de la quantité stoechiométrique nécessaire pour hydrolyser totalement le précurseur, de préférence de 70 à 100 % de la quantité stoechiométrique. De préférence, dans beaucoup de cas de figures, il est préférable de mettre en oeuvre une quantité totale de base correspondant sensiblement à la stoechiométrie.

Selon un mode de réalisation plus particulier de l'invention, si n1 est non nul et représente le nombre de moles de base mise en oeuvre lors de l'étape b), n2 représente le nombre de moles de base mise en oeuvre lors de l'étape d), n représente la somme de n1 et n2, alors n1 et n2 vérifient les inéquations suivantes 0 < n1 ≤ 0,8 n, de préférence 0,3 ≤ n1≤ 0,6 ; et 0.2 n≤ n2 < n, de préférence 0,4 ≤ n2 ≤ 0,7.

Il est rappelé que n correspond au nombre de moles de base requis pour aboutir soit à une hydrolyse partielle, soit à une hydrolyse totale (avec ou sans excès de base) du précurseur.

En outre, il est à noter que la taille des particules obtenues après l'étape d) peut être modifiée en fonction du degré d'hydrolyse lors de l'étape b), si elle a lieu. Ainsi, plus n1 est élevé, plus la taille des particules issue de l'étape d) est grande.

Selon un mode de réalisation de la présente invention, les étapes a) à d) sont mises en oeuvre dans un milieu aqueux dont le pH est réglé de préférence entre 5 et 12, de façon préférée à un pH au moins égal au pKa de la ou des composantes anioniques du copolymère peigne.

Les températures mises en oeuvre lors des étapes a) à d) peuvent être déterminées sans difficulté par l'homme du métier. Elles sont classiquement comprises entre 0°C et la température d'ébullition du milieu aqueux (habituellement voisine de 100°C). Plus particulièrement, la température est comprise entre 10 et 50°C, de préférence entre 20 et 50°C. De manière avantageuse, la température est proche de la température ambiante. La température peut ou non être maintenue constante durant les étapes a) à d).

A l'issue de cette étape d) d'hydrolyse, on obtient des particules qui se trouvent plus particulièrement sous la forme de colloïdes.

De manière avantageuse, la taille de plus de 80 % en poids desdites particules est comprise entre 2 et 500 nm, de préférence entre 2 et 200 nm.

Selon un mode de réalisation particulier de l'invention, on peut mettre en oeuvre une étape supplémentaire de mûrissement de la dispersion colloidale, après l'étape d) d'hydrolyse.

La température à laquelle cette étape supplémentaire e) est effectuée est comprise généralement entre 20 °C et une température inférieure ou égale au point d'ébullition de ladite dispersion.

Eventuellement après l'étape d) ou après l'étape e) si elle a lieu, le procédé selon l'invention peut comporter une étape supplémentaire f) de concentration de la dispersion. Cette étape supplémentaire de concentration peut être notamment réalisée en séparant partiellement ou totalement les particules du milieu de la dispersion, puis éventuellement en redispersant dans une quantité appropriée de milieu aqueux les particules ainsi obtenues.

Plus particulièrement l'étape de séparation peut être faite par ultrafiltration, dialyse, précipitation (généralement, au moyen d'un mauvais solvant ou non solvant du(des) polymère(s)), centrifugation, ultracentrifugation, par évaporation totale ou partielle avec ou sans chauffage du milieu aqueux de la dispersion, par lyophilisation, ces étapes pouvant être mises en oeuvre seules ou combinées.

La présente invention a de même pour objet les particules susceptibles d'être obtenues par le procédé selon l'invention ; lesdites particules présentant une taille moyenne comprise entre 2 et 500 nm et de préférence entre 2 et 300 nm. La taille est mesurée par diffusion dynamique de la lumière.

Ces particules présentent l'avantage, une fois séchées, de pouvoir être redispersées aisément en milieu aqueux. Sans vouloir être limité par une théorie particulière, les particules du fait de leur procédé de préparation sont revêtues par le polymère. Ce revêtement est une aide à la redispersion.

Parmi les applications possibles pour les systèmes colloïdaux préparés par le procédé selon l'invention, on peut citer le polissage mécanique d'objets durs tels que des pièces métalliques, l'élaboration de pigments, de céramiques mixtes pour l'électronique, le renforcement de matrices polymériques, les dispersions fongicides ou biocides et le captage de dérivés soufres et, plus généralement, le captage des mauvaises odeurs.

Les exemples suivants illustrent l'invention sans en limiter la portée.

### Exemple 1 :

Cet exemple a pour objet la synthèse d'un copolymère peigne de composition théorique acide acrylique / méthacrylate de polyéthylène glycol (rapport molaire : 88/12)

La copolymérisation de l'acide acrylique et du méthacrylate de PEG est réalisée par voie radicalaire, dans l'éthanol avec comme amorceur l'azo bis(isobutyronitrile) (AIBN) (1,6% molaire par rapport aux monomères), comme suit :

Dans un ballon tri-cols 500 ml muni d'un barreau aimanté, d'une arrivée d'azote, et d'un bain d'huile, sont introduits à 25°C sous azote :
- 115,14 g d'éthanol
- 0,2444 g d'AIBN
- 5,87 g d'acide acrylique
- 23,45 g de méthacrylate de PEG 2000 (LAPORTE) solubilisé dans 37,05 g d'eau.

La température est ensuite portée à 75°C. Elle est maintenue à 75°C pendant 6 heures et demie.

L'éthanol est ensuite éliminé sous vide à 45°C (évaporateur rotatif) puis le produit est mis en solution dans de l'eau (concentration massique : 32,67%).

La masse molaire en poids est de 36 000 g/mol. Elle est déterminée par GPC aqueuse à température ambiante (colonnes SHODEX, eau/acétonitrile 80/20 w/w, étalonnage PEG , marqueur : éthylène glycol). L'indice de polymolécularité (Ip) est environ de 2,3 (il représente le rapport de la masse molaire moyenne en masse et de la masse molaire en masse au sommet).

Le polymère est ensuite purifié par dialyse contre de l'eau pure durant 7 jours dans un sac de dialyse avec un seuil de coupure a 3500 daltons.

On lyophilise enfin le polymère.

La composition finale du polymère est ensuite déterminée par titration acido-basique d'une solution a 1% en poids de copolymère avec NaOH 0,05M.

Le résultat est le suivant: 13% en poids d'acide acrylique et 87% en poids de méthacrylate de PEG.

### Exemple 2 :

Cet exemple a pour objet l'obtention d'une suspension colloïdale de chlorure de cuivre partiellement hydrolysé, stabilisée par un copolymère peigne.

On verse 3 ml d'une solution aqueuse de CuCl₂ à 8.10⁻³M dans un bécher.

On ajoute ensuite 0,150ml d'une solution aqueuse de soude à 0,2M sous agitation magnétique.

On continue d'agiter la solution durant 10 minutes.

Le degré de préhydrolyse du cuivre est alors OH/Cu = 1,25.

Sous agitation, on ajoute 0,110 ml d'une solution à 4,97% en poids de copolymère peigne obtenu à l'exemple 1, après avoir ajusté le pH de la solution de copolymère à 5,3.

Le rapport molaire acide acrylique/Cu est de 0,4.

On ajoute ensuite 1,24 ml d'eau Millipore sous agitation magnétique.

La concentration molaire de cuivre est de 5,33.10⁻³M.

La suspension obtenue est bleue et légèrement turbide, son pH est de 5,4.

Le rayon hydrodynamique des particules mesuré par diffusion dynamique de la lumière est de 108 nm.

### Exemple 3 :

Cet exemple concerne l'obtention d'une suspension colloïdale d'hydroxyde de cuivre, stabilisée par un copolymère peigne.

On verse 3 ml d'une solution aqueuse de CuCl₂ à 8.10⁻³M dans un bécher.

On ajoute ensuite 0,150ml d'une solution aqueuse de soude à 0,2 M sous agitation magnétique.

On continue d'agiter la solution durant 10 minutes.

Le degré de préhydrolyse du cuivre est alors OH/Cu = 1,25.

Sous agitation, on ajoute 0,110 ml d'une solution à 4,97% en poids de copolymère peigne obtenu à l'exemple 1, après avoir ajusté le pH de la solution de copolymère à 5,3.

Le rapport molaire acide acrylique / Cu est de 0,4.

On ajoute ensuite 0,090 ml d'une solution aqueuse à 0,2 M sous agitation magnétique.

On continue d'agiter la solution durant 5 minutes.

Le degré d'hydrolyse final du cuivre est alors OH/Cu = 2,0.

On ajoute ensuite 1,25 ml d'eau Millipore sous agitation magnétique.

La dispersion ainsi obtenue est bleue et légèrement turbide. La concentration molaire en cuivre est 5,33.10⁻³M, et le pH est 7,8 après 9 jours.

Le rayon hydrodynamique des particules mesuré par diffusion dynamique de la lumière est de 108 nm.

### Exemple 4 :

Cet exemple a pour objet l'obtention d'une suspension colloïdale d'hydroxyde de cuivre à concentration plus élevée, stabilisée par un copolymère peigne.

On verse 3 ml d'une solution aqueuse de CuCl₂ à 4.10⁻²M dans un bécher.

On ajoute ensuite 0,155 ml d'une solution aqueuse de soude à 0,96 M sous agitation magnétique.

On continue d'agiter la solution durant 10 minutes.

Le degré de préhydrolyse du cuivre est alors OH/Cu = 1,25.

Sous agitation, on ajoute 0,67 ml d'une solution à 4,97% en poids de copolymère peigne obtenu à l'exemple 1, après avoir ajusté le pH de la solution de copolymère à 5,3.

Le rapport molaire acide acrylique/Cu est de 0,5.

On ajoute ensuite 0,094 ml d'une solution aqueuse à 0,96 M sous agitation magnétique.

On continue d'agiter la solution durant 5 minutes.

Le degré d'hydrolyse final du cuivre est alors OH/Cu = 2,0.

On ajoute ensuite 0,58 ml d'eau Millipore sous agitation magnétique.

La dispersion ainsi obtenue est bleue et turbide.

La concentration molaire en cuivre est 2.67.10⁻²M, et le pH est 9,4 après 6 jours.

Le rayon hydrodynamique des particules mesuré par diffusion dynamique de la lumière est de 95 nm.

### Exemple 5 :

Cet exemple illustre le séchage et la redispersion d'une suspension colloïdale d'hydroxyde de cuivre stabilisée par un copolymère peigne.

On sèche dans un bécher durant au moins 12 heures dans une hotte à flux laminaire sans chauffage, 4,5ml d'une suspension d'hydroxyde de cuivre synthétisée selon la procédure décrite dans l'exemple 3.

On ajoute ensuite 4 ml d'eau Millipore aux particules séchées, sous agitation magnétique.

Le rayon hydrodynamique des particules mesuré par diffusion dynamique de la lumière après 10 minutes d'agitation est de 135 nm au lieu de 115 nm avant séchage. La différence entre les deux valeurs est dans le domaine d'erreur de la technique et montre qu'il n'y a pas d'agrégation.

### Exemple 6 :

Cet exemple illustre le séchage et la redispersion d'une suspension colloïdale d'hydroxyde de cuivre plus concentrée, stabilisée par un copolymère peigne.

On sèche dans un bécher durant au moins 12 heures dans une hotte à flux laminaire sans chauffage, 21 ml d'une suspension d'hydroxyde de cuivre synthétisée selon la procédure décrite dans l'exemple 3.

On ajoute ensuite 1 ml d'eau Millipore aux particules séchées, sous agitation magnétique.

La concentration finale en cuivre est donc 21 fois plus élevée qu'avant l'étape de séchage.

Le rayon hydrodynamique des particules mesuré par diffusion dynamique de la lumière après 10 minutes d'agitation est de 124 nm au lieu de 115 nm avant séchage.

## Revendications

1. Procédé de préparation de particules comprenant au moins un ion métallique, comprenant les étapes suivantes :
a) on met en solution ou dispersion aqueuse au moins un précurseur comprenant un cation métallique ;
b) on effectue éventuellement une hydrolyse partielle dudit précurseur,
c) on met en contact le précurseur issu de l'étape a) ou le précurseur partiellement hydrolysé issu de l'étape b), avec au moins un copolymère peigne hydrosoluble comportant soit un squelette anionique complexant et des chaînes latérales hydrophiles stabilisantes, soit un squelette neutre hydrophile stabilisant et des chaînes latérales anioniques complexantes, soit au moins l'un des deux copolymères précités, associé à au moins un polymère hydrophile anionique complexant ;
d) On effectue une hydrolyse partielle ou totale du produit obtenu lors de l'étape c).

2. Procédé selon la revendication 1, **caractérisé en ce que** le cation métallique est choisi parmi les métaux des colonnes IIIA IVA, VIII, IB, IIB, IIIB et VB de la classification périodique, les lanthanides, les actinides et le titane.

3. Procédé selon la revendication 2, **caractérisé en ce que** le cation métallique est choisi parmi le titane, le fer, le cobalt, le nickel, le cuivre, l'aluminium, le zinc, l'or, l'argent, le platine, le cérium, le lanthane, l'yttrium, l'iridium, le ruthénium, le rhodium, l'osmium, le palladium, ou leurs mélanges.

4. Procédé selon l'une des revendications précédentes, **caractérisé en ce que** le précurseur est sous forme d'une solution aqueuse d'un sel hydrosoluble de cation métallique, choisi parmi les nitrates, les sulfates, les chlorures, les phosphates, ou leurs mélanges.

5. Procédé selon l'une des revendications 1 à 4, **caractérisé en ce que** le précurseur est sous forme d'une dispersion aqueuse de particules ou d'agrégats de particules comprenant un hydroxyde, un oxohydroxyde, un sel hydrosoluble partiellement hydrolysé de cation métallique, seuls ou en mélanges, éventuellement combiné(s) à un oxyde de cation métallique.

6. Procédé selon la revendication précédente, **caractérisé en ce que** les particules ou les agrégats ont une taille moyenne inférieure ou égale à 100 nm, de préférence comprise entre 2 et 100 nm.

7. Procédé selon l'une des revendications précédentes, **caractérisé en ce que** les hydrolyses de l'étape b) et celle de l'étape d) sont réalisées en présence d'une base choisie parmi les hydroxydes de métaux alcalins ou alcalino-terreux et l'ammoniaque.

8. Procédé selon la revendication 7, **caractérisé en ce que** la base est choisie parmi l'hydroxyde de sodium, l'hydroxyde de potassium, l'hydroxyde de calcium, l'ammoniaque, seuls ou en mélanges.

9. Procédé selon l'une des revendications précédentes, **caractérisé en ce que** la quantité de base mise en oeuvre lors de l'étape b) si elle a lieu, et lors de l'étape d) correspond à 50 à 130 % de la quantité stoechiométrique nécessaire pour hydrolyser totalement le précurseur.

10. Procédé selon la revendication précédente, **caractérisé en ce que**, si n1 est non nul et représente le nombre de moles de base mise en oeuvre lors de l'étape b), n2 représente le nombre de moles de base mise en oeuvre lors de l'étape d), n représente la somme de n1 et n2, alors n1 et n2 vérifient les inéquations suivantes 0 < n1 ≤ 0,8 n et 0,2n≤n2<n.

11. Procédé selon l'une des revendications précédentes, **caractérisé en ce que** le copolymère peigne hydrosoluble, éventuellement combiné au polymère hydrosoluble, est choisi de telle sorte que le copolymère peigne, éventuellement combiné au polymère hydrophile, forme une solution transparente à 10% en poids dans l'eau, à la température la plus basse du procédé à laquelle est soumis ledit copolymère peigne, éventuellement combiné au polymère hydrophile.

12. Procédé selon la revendication précédente, **caractérisé en ce que** la masse moléculaire en poids (Mw) est comprise entre 2000 et 5.10⁵ g/mol, de préférence entre 3000 et 10⁵g/mole.

13. Procédé selon l'une des revendications 11 ou 12, **caractérisé en ce que** le copolymère peigne hydrosoluble comporte un squelette hydrophile anionique complexant et des chaînes latérales hydrophiles stabilisantes non ioniques. ; Le squelette anionique étant obtenu à partir de monomères choisis parmi :
- les acides mono- ou poly- carboxyliques linéaires, ramifiés, cycliques ou aromatiques, comprenant au moins une insaturation éthylénique, et au moins 3 à 10 atomes de carbone ; les dérivés N-substitués de tels acides ; les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
seuls ou en mélanges, leurs précurseurs, leurs homologues sulfoniques ou phosphoniques, phosphoriques ainsi que les macromonomères dérivant de tels monomères ; les monomères ou macromonomères pouvant être sous la forme de sels.

14. Procédé selon la revendication 13, **caractérisé en ce que** les monomères formant les chaînes latérales non ioniques sont des espèces macromonomères choisies parmi les macromonomères de type (méth)acrylate de poly(éthylène glycol), (méth)acrylate d'alcool polyvinylique, (méth)acrylate de poly(hydroxy (C₁-C₄)-alkyl (méth)acrylate), (méth)acrylate de poly(N-méthylol acrylamide), (méth)acrylate de poly((méth)acryl amide).

15. Procédé selon la revendication précédente, **caractérisé en ce que** les chaînes latérales non ioniques présentent une masse molaire en nombre de poly(éthylène glycol) compris entre 200 et 10000 g/mol, de préférence entre 300 et 2000 g/mol.

16. Procédé selon l'une des revendications 11 à 12, **caractérisé en ce que** le copolymère comprend un squelette neutre hydrophile stabilisant et des chaînes latérales hydrophiles anioniques complexantes ; ledit squelette neutre étant obtenu à partir d'oxyde d'éthylène sous la forme d'un oligomère ou d'un polymère.

17. Procédé selon la revendication précédente, **caractérisé en ce que** les chaînes latérales sont obtenues à partir de monomères choisis parmi :
- les acides mono- ou poly- carboxyliques linéaires, ramifiés, cycliques ou aromatiques, comprenant au moins une insaturation éthylénique, et au moins 3 à 10 atomes de carbone ; les dérivés N-substitués de tels acides ; les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
seuls ou en mélanges, leurs précurseurs, leurs homologues sulfoniques ou phosphoniques, phosphoriques ainsi que les macromonomères dérivant de tels monomères ; les monomères ou macromonomères pouvant être sous la forme de sels.

18. Procédé selon l'une quelconque des revendications 11 à 17, **caractérisé en ce que** les monomères formant le squelette anionique complexant ou les chaînes latérales anioniques complexantes, peuvent être associés à, ou en partie substitués par, des monomères choisis parmi :
- les esters des acides mono- ou poly- carboxyliques, linéaires, ramifiés, cycliques ou aromatiques, comprenant au moins une insaturation éthylénique,
- les dérivés de l'acrylamide tels que les N-alkyl ou N,N-dialkyl acrylamides, les N-alkyl ou N,N-dialkyl méthacrylamides ;
- les nitriles αβ-éthyléniquement insaturés, les éthers vinyliques, les esters vinyliques, les monomères vinylaromatiques, les halogénures de vinyle ou de vinylidène,
- les monomères hydrocarbonés, linéaires ou ramifiés, aromatiques ou non, comprenant au moins une insaturation éthylénique, éventuellement substitués par un atome d'halogène, plus particulièrement comprenant 2 à 12 atomes de carbone,
- l'oxyde de propylène, l'oxyde de butylène ;
seuls ou en mélanges, ainsi que les macromonomères dérivant de tels monomères.

19. Procédé selon l'une des revendications. 11 à 18, **caractérisé en ce que** le copolymère est associé à au moins un polymère obtenu par polymérisation d'au moins un monomère anionique choisis parmi :
- les acides mono- ou poly- carboxyliques linéaires, ramifiés, cycliques ou aromatiques, comprenant au moins une insaturation éthylénique, et au moins 3 à 10 atomes de carbone ; les dérivés N-substitués de tels acides ; les monoesters d'acides polycarboxyliques, comprenant au moins une insaturation éthylénique ;
- les acides vinyl carboxyliques linéaires, ramifiés, cycliques ou aromatiques ;
- les aminoacides comprenant une ou plusieurs insaturations éthyléniques ;
seuls ou en mélanges, leurs précurseurs, leurs homologues sulfoniques ou phosphoniques, phosphoriques ainsi que les macromonomères dérivant de tels monomères ; les monomères ou macromonomères pouvant être sous la forme de sels.

20. Procédé selon la revendication précédente, **caractérisé en ce que** la masse molaire en poids du polymère est comprise entre 2000 et 5.105 g/mol, de préférence entre 3000 et 10⁵g/mole.

21. Procédé selon l'une quelconque des revendications précédentes, **caractérisé en ce que** le taux de copolymère mis en oeuvre lors de l'étape c), qui est le rapport molaire du groupe complexant du copolymère de la ou des parties hydrophile(s) anionique(s) sur le nombre de mole du cation métallique contenu dans le précurseur, est compris entre 0,05 et 2, plus particulièrement entre 0,1 et 0,5.

22. Procédé selon l'une des revendications précédentes, **caractérisé en ce que** la taille moyenne d'au moins 80 % des particules obtenues à la fin de l'étape d) est comprise entre 2 et 500 nm, de préférence entre 2 et 300 nm.

23. Procédé selon l'une quelconque des revendications précédentes, **caractérisé en ce qu'**après l'étape d), on effectue une étape e) de mûrissement à une température comprise entre 10°C et une température inférieure ou égale au point d'ébullition de ladite dispersion.

24. Procédé selon la revendication 23, **caractérisé en ce que** l'on effectue après l'étape d) ou après l'étape e), une étape f) une concentration de la dispersion.

25. Procédé selon la revendication 24, **caractérisé en ce que** la concentration est effectuée en séparant partiellement ou totalement les particules du milieu de la dispersion, puis éventuellement en redispersant dans une quantité appropriée de milieu aqueux les particules ainsi obtenues.

26. Procédé selon l'une des revendications 24 ou 25, **caractérisé en ce que** l'étape de séparation peut être faite est par ultrafiltration, dialyse, précipitation, centrifugation, ultracentrifugation, par évaporation totale ou partielle avec ou sans chauffage du milieu aqueux de la dispersion, par lyophilisation, ces étapes pouvant être mises en oeuvre seules ou combinées.

27. Particules susceptibles d'être obtenues selon l'une des revendications précédentes, **caractérisées en ce que** la taille moyenne desdites particules est comprise entre 2 et 500 nm et de préférence entre 2 et 300 nm.

28. Utilisation des particules selon la revendication précédente, ou susceptibles d'être obtenues par le procédé selon l'une des revendications 1 à 26, dans le polissage mécanique d'objets durs, dans l'élaboration de pigments, de céramiques mixtes pour l'électronique, dans le renforcement de matrices polymériques, dans les dispersions fongicides ou biocides, dans le captage de dérivés soufrés, dans le captage des mauvaises odeurs.

## Claims

1. Process for preparing particles comprising at least one metal ion, in which the following steps are carried out:
a) at least one precursor comprising a metal cation is placed in aqueous solution or dispersion;
b) said precursor is optionally partially hydrolyzed;
c) the precursor obtained from step a) or the partially hydrolyzed precursor obtained from step b) is placed in contact with at least one water-soluble comb copolymer comprising either a complexing anionic skeleton and stabilizing hydrophilic side chains, or a stabilizing neutral hydrophilic skeleton and complexing anionic side chains, or at least one of the two abovementioned copolymers, combined with at least one complexing anionic hydrophilic polymer;
d) the product obtained during step c) is partially or totally hydrolyzed.

2. Process according to Claim 1, **characterized in that** the metal cation is chosen from the metals of columns IIIA, IVA, VIII, IB, IIB, IIIB and VB of the Periodic Table, the lanthanides, the actinides and titanium.

3. Process according to Claim 2, **characterized in that** the metal cation is chosen from titanium, iron, cobalt, nickel, copper, aluminum, zinc, gold, silver, platinum, cerium, lanthanum, yttrium, iridium, ruthenium, rhodium, osmium and palladium, or mixtures thereof.

4. Process according to one of the preceding claims, **characterized in that** the precursor is in the form of an aqueous solution of a water-soluble salt of a metal cation, chosen from the nitrates, sulfates, chlorides and phosphates, or mixtures thereof.

5. Process according to one of Claims 1 to 4, **characterized in that** the precursor is in the form of an aqueous dispersion of particles or of particle aggregates comprising a hydroxide, an oxohydroxide or a partially hydrolyzed water-soluble salt of a metal cation, alone or as mixtures, optionally combined with a metal cation oxide.

6. Process according to the preceding claim, **characterized in that** the particles or aggregates have a mean size of less than or equal to 100 nm and preferably between 2 and 100 nm.

7. Process according to one of the preceding claims, **characterized in that** the hydrolyses of step b) and that of step d) are performed in the presence of a base chosen from alkali metal or alkaline-earth metal hydroxides and aqueous ammonia.

8. Process according to Claim 7, **characterized in that** the base is chosen from sodium hydroxide, potassium hydroxide, calcium hydroxide and aqueous ammonia, alone or as mixtures.

9. Process according to one of the preceding claims, **characterized in that** the amount of base used during step b), if it is performed, and during step d) corresponds to 50% to 130% of the stoichiometric amount required to totally hydrolyze the precursor.

10. Process according to the preceding claim, **characterized in that** if n1 is nonzero and represents the number of moles of base used during step b), n2 represents the number of moles of base used during step d) and n represents the sum of n1 and n2, then n1 and n2 satisfy the following inequations: 0 < n1 ≤ 0.8n and 0.2n ≤ n2 ≤ n.

11. Process according to one of the preceding claims, **characterized in that** the water-soluble comb copolymer, optionally combined with the water-soluble polymer, is chosen such that the comb copolymer, optionally combined with the hydrophilic polymer, forms a transparent solution at a concentration of 10% by weight in water, at the lowest temperature of the process to which said comb copolymer is subjected, optionally combined with the hydrophilic polymer.

12. Process according to the preceding claim, **characterized in that** the weight-average molecular mass (Mw) is between 2 000 and 5 × 10⁵ g/mol and preferably between 3 000 and 10⁵ g/mol.

13. Process according to either of Claims 11 and 12, **characterized in that** the water-soluble comb copolymer comprises a complexing anionic hydrophilic skeleton and nonionic stabilizing hydrophilic side chains, the anionic skeleton being obtained from monomers chosen from:
- linear, branched, cyclic or aromatic monocarboxylic or polycarboxylic acids, comprising at least one ethylenic unsaturation, and at least 3 to 10 carbon atoms; N-substituted derivatives of such acids; monoesters of polycarboxylic acids, comprising at least one ethylenic unsaturation;
- linear, branched, cyclic or aromatic vinylcarboxylic acids;
- amino acids comprising one or more ethylenic unsaturations;
alone or as mixtures, precursors thereof, sulfonic or phosphonic or phosphoric homologs thereof and also macromonomers derived from such monomers; the monomers or macromonomers possibly being in the form of salts.

14. Process according to Claim 13, **characterized in that** the monomers forming the nonionic side chains are macromonomer species chosen from macromonomers of the type such as poly(ethylene glycol) (meth)acrylate, polyvinyl alcohol (meth)acrylate, poly (hydroxy(C₁-C₄)alkyl (meth)acrylate) (meth)acrylate, poly(N-methylolacrylamide) (meth)acrylate, poly((meth)acrylamide) (meth)acrylate.

15. Process according to the preceding claim, **characterized in that** the nonionic side chains have a poly(ethylene glycol) number-average molar mass of between 200 and 10 000 g/mol and preferably between 300 and 2 000 g/mol.

16. Process according to either of Claims 11 and 12, **characterized in that** the copolymer comprises a stabilizing hydrophilic neutral skeleton and complexing anionic hydrophilic side chains, said neutral skeleton being obtained from ethylene oxide in the form of an oligomer or a polymer.

17. Process according to the preceding claim, **characterized in that** the side chains are obtained from monomers chosen from:
- linear, branched, cyclic or aromatic monocarboxylic or polycarboxylic acids, comprising at least one ethylenic unsaturation, and at least 3 to 10 carbon atoms; N-substituted derivatives of such acids; monoesters of polycarboxylic acids, comprising at least one ethylenic unsaturation;
- linear, branched, cyclic or aromatic vinylcarboxylic acids;
- amino acids comprising one or more ethylenic unsaturations;
alone or as mixtures, precursors thereof, sulfonic or phosphonic or phosphoric homologs thereof and also macromonomers derived from such monomers; the monomers or macromonomers possibly being in the form of salts.

18. Process according to any one of Claims 11 to 17, **characterized in that** the monomers forming the complexing anionic skeleton or the complexing anionic side chains may be combined with, or partially substituted with, monomers chosen from:
- linear, branched, cyclic or aromatic monocarboxylic or polycarboxylic acid esters comprising at least one ethylenic unsaturation,
- acrylamide derivatives such as N-alkyl or N,N-dialkyl acrylamides and N-alkyl or N,N-dialkyl methacrylamides;
- α,β-ethylenically unsaturated nitriles, vinyl ethers, vinyl esters, vinylaromatic monomers and vinyl or vinylidene halides,
- linear or branched, aromatic or nonaromatic hydrocarbon-based monomers comprising at least one ethylenic unsaturation, optionally substituted with a halogen atom, more particularly containing 2 to 12 carbon atoms,
- propylene oxide or butylene oxide;
alone or as mixtures, and also the macromonomers derived from such monomers.

19. Process according to one of Claims 11 to 18, **characterized in that** the copolymer is combined with at least one polymer obtained by polymerization of at least one anionic monomer chosen from:
- linear, branched, cyclic or aromatic monocarboxylic or polycarboxylic acids, comprising at least one ethylenic unsaturation, and at least 3 to 10 carbon atoms; N-substituted derivatives of such acids; monoesters of polycarboxylic acids, comprising at least one ethylenic unsaturation;
- linear, branched, cyclic or aromatic vinylcarboxylic acids;
- amino acids comprising one or more ethylenic unsaturations;
alone or as mixtures, precursors thereof, sulfonic or phosphonic or phosphoric homologs thereof and also macromonomers derived from such monomers; the monomers or macromonomers possibly being in the form of salts.

20. Process according to the preceding claim, **characterized in that** the weight-average molar mass of the polymer is between 2 000 and 5 × 10⁵ g/mol, and preferably between 3 000 and 10⁵ g/mol.

21. Process according to any one of the preceding claims, **characterized in that** the copolymer content used during step c), which is the molar ratio of the complexing group of the copolymer and of the anionic hydrophilic portion(s) to the number of moles of the metal cation contained in the precursor, is between 0.05 and 2 and more particularly between 0.1 and 0.5.

22. Process according to one of the preceding claims, **characterized in that** the average size of at least 80% of the particles obtained at the end of step d) is between 2 and 500 nm and preferably between 2 and 300 nm.

23. Process according to any one of the preceding claims, **characterized in that** after step d), a step e) of maturation is performed at a temperature of between 10°C and a temperature less than or equal to the boiling point of said dispersion.

24. Process according to Claim 23, **characterized in that** after step d) or after step e), a step f) of concentrating the dispersion is performed.

25. Process according to Claim 24, **characterized in that** the concentration is performed by partially or totally separating the particles from the dispersion medium and then optionally redispersing the particles thus obtained in a suitable amount of aqueous medium.

26. Process according to either of Claims 24 and 25, **characterized in that** the separation step may be performed by ultrafiltration, dialysis, precipitation, centrifugation, ultracentrifugation, by total or partial evaporation with or without heating of the aqueous medium of the dispersion, or by lyophilization, these steps possibly being performed alone or in combination.

27. Particles that may be obtained according to one of the preceding claims, **characterized in that** the mean size of said particles is between 2 and 500 nm and preferably between 2 and 300 nm.

28. Use of the particles according to the preceding claim, or that may be obtained by the process according to one of Claims 1 to 26, in the mechanical polishing of hard objects, in the production of pigments or of mixed ceramics for electronics, in the reinforcing of polymer matrices, in fungicidal or biocidal dispersions, in the capture of sulfur derivatives or in the capture of unpleasant odors.

## Patentansprüche

1. Verfahren zur Herstellung von Partikeln, die mindestens ein Metallion umfassen, das die folgenden Schritte umfasst:
a) In Lösung oder wässrige Dispersion geben mindestens eines Vorläufers, der ein Metallkation umfasst;
b) gegebenenfalls Durchführen einer teilweisen Hydrolyse des Vorläufers,
c) In Kontakt bringen des Vorläufers aus Schritt a) oder des teilweise hydrolysierten Vorläufers aus Schritt b) mit mindestens einem wasserlöslichen Kamm-Copolymer, das entweder eine komplexierende anionische Hauptkette und stabilisierende hydrophile Seitenketten oder eine stabilisierende hydrophile neutrale Hauptkette und komplexierende anionische Seitenketten oder mit mindestens einem der beiden vorgenannten Copolymere, assoziiert mit mindestens einem komplexierenden anionischen hydrophilen Polymer;
d) Durchführen einer teilweisen oder vollständigen Hydrolyse des in Schritt c) erhaltenen Produkts.

2. Verfahren nach Anspruch 1, **dadurch gekennzeichnet, dass** das Metallkation ausgewählt ist aus den Metallen der Spalten IIIA, IVA, VIII, IB, IIB, IIIB und VB des Periodensystems der Elemente, den Lanthaniden, den Actiniden und Titan.

3. Verfahren nach Anspruch 2, **dadurch gekennzeichnet, dass** das Metallkation ausgewählt ist aus Titan, Eisen, Cobalt, Nickel, Kupfer, Aluminium, Zink, Gold, Silber, Platin, Cer, Lanthan, Yttrium, Iridium, Ruthenium, Rhodium, Osmium, Palladium oder deren Gemischen.

4. Verfahren nach einem der vorhergehenden Ansprüche, **dadurch gekennzeichnet, dass** der Vorläufer die Form einer wässrigen Lösung eines wasserlöslichen Salzes des Metallkations aufweist, ausgewählt aus den Nitraten, Sulfaten, Chloriden, Phosphaten oder deren Gemischen.

5. Verfahren nach einem der Ansprüche 1 bis 4, **dadurch gekennzeichnet, dass** der Vorläufer die Form einer wässrigen Dispersion von Partikeln oder Partikelaggregaten aufweist, umfassend ein Hydroxid, ein Oxo-Hydroxid, ein teilweise hydrolysiertes wasserlösliches Salz des Metallkations, allein oder als Gemische, gegebenenfalls kombiniert mit einem Oxid des Metallkations.

6. Verfahren nach dem vorhergehenden Anspruch, **dadurch gekennzeichnet, dass** die Partikel oder die Aggregate eine mittlere Größe von kleiner oder gleich 100 nm, bevorzugt im Bereich zwischen 2 und 100 nm aufweisen.

7. Verfahren nach einem der vorhergehenden Ansprüche, **dadurch gekennzeichnet, dass** die Hydrolysen aus Schritt b) und die Hydrolysen aus Schritt d) in Gegenwart einer Base, ausgewählt aus Alkali- oder Erdalkalimetallhydroxiden und Ammoniak, ausgeführt werden.

8. Verfahren nach Anspruch 7, **dadurch gekennzeichnet, dass** die Base ausgewählt ist aus Natriumhydroxid, Kaliumhydroxid, Calciumhydroxid, Ammoniak, allein oder als Gemische.

9. Verfahren nach einem der vorhergehenden Ansprüche, **dadurch gekennzeichnet, dass** die Menge der Base, die gegebenenfalls in Schritt b) und in Schritt d) eingesetzt wird, 50 bis 130 % der stöchiometrischen Menge entspricht, die erforderlich ist, um den Vorläufer vollständig zu hydrolysieren.

10. Verfahren nach dem vorhergehenden Anspruch, **dadurch gekennzeichnet, dass**, wenn n1 nicht null ist und für die Molanzahl der in Schritt b) eingesetzten Base steht, n2 für die Molanzahl der Base steht, die in Schritt d) eingesetzt wird, n für die Summe aus n1 und n2 steht, dann erfüllen n1 und n2 die folgenden Ungleichungen 0 < n1 ≤ 0,8 n und 0,2 n ≤ n2 < n.

11. Verfahren nach einem der vorhergehenden Ansprüche, **dadurch gekennzeichnet, dass** das wasserlösliche Kamm-Copolymer, das gegebenenfalls mit dem wasserlöslichen Polymer kombiniert ist, derart ausgewählt ist, dass das Kamm-Copolymer, das gegebenenfalls mit dem wasserlöslichen Polymer kombiniert ist, eine transparente Lösung mit 10 Gew.-% in Wasser bildet, bei der niedrigsten Temperatur des Verfahrens, dem das Kamm-Copolymer, das gegebenenfalls mit dem hydrophilen Polymer kombiniert ist, unterzogen wird.

12. Verfahren nach dem vorhergehenden Anspruch, **dadurch gekennzeichnet, dass** der Gewichtsmittelwert des Molekulargewichts (Mw) im Bereich zwischen 2.000 und 5.10⁵ g/mol, bevorzugt zwischen 3.000 und 10⁵ g/Mol liegt.

13. Verfahren nach einem der Ansprüche 11 oder 12, **dadurch gekennzeichnet, dass** das wasserlösliche Kamm-Copolymer eine komplexierenden anionische hydrophile Hauptkette und nicht ionische stabilisierende hydrophile Seitenketten umfasst. Wobei die anionische Hauptkette aus Monomeren erhalten werden, die ausgewählt sind aus:
- cyclischen oder aromatischen, verzweigtkettigen, geradkettigen Mono- oder Polycarbonsäuren, die mindestens eine ethylenische Ungesättigtheit und mindestens 3 bis 10 Kohlenstoffatome umfassen; den N-substituierten Derivaten dieser Säuren; den Monoestern der Polycarbonsäuren, die mindestens eine ethylenische Ungesättigtheit umfassen;
- den cyclischen oder aromatischen, verzweigtkettigen oder geradkettigen Vinylcarbonsäuren;
- den Aminosäuren, die eine oder mehrere ethylenische Ungesättigtheiten umfassen; allein oder als Gemische, deren Vorläufer, deren Sulphonsäure-, Phosphonsäure- oder Phosphorsäure-Homologe sowie den Makromonomeren, die von diesen Monomeren abgeleitet sind; den Monomeren oder Makromonomeren, die die Form von Salzen aufweisen können.

14. Verfahren nach Anspruch 13, **dadurch gekennzeichnet, dass** die Monomere, die die nicht ionischen Seitenketten bilden, Makromonomer-Spezies sind, ausgewählt aus den Makromonomeren vom Typ Poly(ethylenglycol)(meth)acrylat, Polyvinylalkohol(meth)acrylat, Poly(hydroxy(C₁-C₉)-alkyl(meth)acrylat)(meth)acrylat, Poly(N-methylolacrylamid)(meth)acrylat, Poly((meth)acrylamid)(meth)acrylat.

15. Verfahren nach dem vorhergehenden Anspruch, **dadurch gekennzeichnet, dass** die nicht ionischen Seitenketten einen Zahlenmittelwert der Molmasse an Poly(ethylenglycol) im Bereich zwischen 200 und 10.000 g/mol, bevorzugt zwischen 300 und 2.000 g/mol aufweisen.

16. Verfahren nach einem der Ansprüche 11 bis 12, **dadurch gekennzeichnet, dass** das Copolymer eine stabilisierende hydrophile neutrale Hauptkette und komplexierende anionische hydrophile Seitenketten umfasst; wobei die neutrale Hauptkette aus Ethylenoxid in Form eines Oligomers oder eines Polymers erhalten wird.

17. Verfahren nach dem vorhergehenden Anspruch, **dadurch gekennzeichnet, dass** die Seitenketten aus Monomeren erhalten werden, die ausgewählt sind aus:
- den cyclischen oder aromatischen, verzweigtkettigen, geradkettigen Mono- oder Polycarbonsäuren, die mindestens eine ethylenische Ungesättigtheit und mindestens 3 bis 10 Kohlenstoffatome umfassen; den N-substituierten Derivaten dieser Säuren; den Monoestern der Polycarbonsäuren, die mindestens eine ethylenische Ungesättigtheit umfassen;
- den cyclischen oder aromatischen, verzweigtkettigen oder geradkettigen Vinylcarbonsäuren;
- den Aminosäuren, die eine oder mehrere ethylenische Ungesättigtheiten umfassen; allein oder als Gemische, deren Vorläufer, deren Sulfonsäure-, Phosphonsäure- oder Phosphorsäure-Homologe sowie den Makromonomeren, die von diesen Monomeren abgeleitet sind; den Monomeren oder Makromonomeren, die die Form von Salzen aufweisen können.

18. Verfahren nach irgendeinem der Ansprüche 11 bis 17, **dadurch gekennzeichnet, dass** die Monomere, die die komplexierende anionische Hauptkette oder die komplexierenden anionischen Seitenketten bilden, assoziiert sein können oder teilweise substituiert sein können mit Monomeren, die ausgewählt sind aus:
- den Estern der cyclischen oder aromatischen, verzweigtkettigen oder geradkettigen Mono- oder Polycarbonsäuren, die mindestens eine ethylenische Ungesättigtheit umfassen,
- den Acrylamidderivaten, wie etwa den N-Alkyl- oder N,N-Dialkylacrylamiden, den N-Alkyl- oder N,N-Dialkylmethacrylamiden;
- den αβ-ethylenisch ungesättigten Nitrilen, den Vinylethern, den Vinylestern, den vinylaromatischen Monomeren, den Vinyl- oder Vinylidenhalogeniden,
- den aromatischen oder nicht aromatischen, verzweigtkettigen oder geradkettigen kohlenstoffhaltigen Monomeren, die mindestens eine ethylenische Ungesättigtheit umfassen, gegebenenfalls mit einem Halogenatom substituiert, die insbesondere 2 bis 12 Kohlenstoffatome umfassen,
- Propylenoxid, Butylenoxid;
allein oder als Gemische, sowie den Makromonomeren, die sich von diesen Monomeren ableiten.

19. Verfahren nach einem der Ansprüche 11 bis 18, **dadurch gekennzeichnet, dass** das Copolymer mit mindestens einem Polymer assoziiert ist, das durch Polymerisation mindestens eines anionischen Monomers erhalten wurde, ausgewählt aus:
- den cyclischen oder aromatischen, verzweigtkettigen, geradkettigen Mono- oder Polycarbonsäuren, die mindestens eine ethylenische Ungesättigtheit und mindestens 3 bis 10 Kohlenstoffatome umfassen; den N-substituierten Derivaten dieser Säuren; den Monoestern der Polycarbonsäuren, die mindestens eine ethylenische Ungesättigtheit umfassen;
- den cyclischen oder aromatischen, verzweigtkettigen oder geradkettigen Vinylcarbonsäuren;
- den Aminosäuren, die eine oder mehrere ethylenische Ungesättigtheiten umfassen;
allein oder als Gemische, deren Vorläufer, deren Sulfonsäure-, Phosphonsäure- oder Phosphorsäure-Homologe sowie den Makromonomeren, die von diesen Monomeren abgeleitet sind; den Monomeren oder Makromonomeren, die die Form von Salzen aufweisen können.

20. Verfahren nach dem vorhergehenden Anspruch, **dadurch gekennzeichnet, dass** der Gewichtsmittelwert der Molmasse des Polymers im Bereich zwischen 2.000 und 5.10⁵ g/mol, bevorzugt zwischen 3.000 und 10⁵ g/Mol liegt.

21. Verfahren nach irgendeinem der vorhergehenden Ansprüche, **dadurch gekennzeichnet, dass** der Copolymeranteil, der in Schritt c) eingesetzt wird, der das Molverhältnis der komplexierenden Gruppe des Copolymers des (der) hydrophilen anionischen Teils (Teile) zur Molanzahl des Metallkations, das in dem Vorläufer enthalten ist, darstellt, im Bereich zwischen 0,05 und 2, insbesondere zwischen 0,1 und 0,5 liegt.

22. Verfahren nach einem der vorhergehenden Ansprüche, **dadurch gekennzeichnet, dass** die mittlere Größe von mindestens 80 % der Partikel, die am Ende von Schritt d) erhalten werden, im Bereich zwischen 2 und 500 nm, bevorzugt zwischen 2 und 300 nm liegt.

23. Verfahren nach irgendeinem der vorhergehenden Ansprüche, **dadurch gekennzeichnet, dass** nach Schritt d) ein Schritt e) zur Alterung bei einer Temperatur im Bereich zwischen 10 °C und einer Temperatur von kleiner oder gleich dem Siedepunkt der Dispersion durchgeführt wird.

24. Verfahren nach Anspruch 23, **dadurch gekennzeichnet, dass** nach Schritt d) oder nach Schritt e) ein Schritt f) zur Konzentration der Dispersion durchgeführt wird.

25. Verfahren nach Anspruch 24, **dadurch gekennzeichnet, dass** die Konzentration durchgeführt wird, indem die Partikel von dem Dispersionsmedium teilweise oder vollständig getrennt werden, dann gegebenenfalls indem die so erhaltenen Partikel in einer geeigneten Menge an wässrigem Medium erneut dispergiert werden.

26. Verfahren nach einem der Ansprüche 24 oder 25, **dadurch gekennzeichnet, dass** der Schritt zur Trennung durch Ultrafiltration, Dialyse, Präzipitation, Zentrifugation, Ultrazentrifugation, durch teilweise oder vollständige Verdampfung mit oder ohne Erhitzen des wässrigen Dispersionsmediums, durch Lyophilisation erfolgen kann, wobei diese Schritte allein oder in Kombination eingesetzt werden können.

27. Partikel, die gemäß einem der vorhergehenden Ansprüche erhalten werden können, **dadurch gekennzeichnet, dass** die mittlere Größe der Partikel im Bereich zwischen 2 und 500 nm und bevorzugt zwischen 2 und 300 nm liegt.

28. Verwendung der Partikel nach dem vorhergehenden Anspruch oder der Partikel, die durch das Verfahren nach einem der Ansprüche 1 bis 26 erhalten werden können, beim mechanischen Polieren von harten Gegenständen, bei der Entwicklung von Pigmenten, von Mischkeramiken für die Elektronik, bei der Verstärkung von polymeren Matrizen, bei fungiziden oder bioziden Dispersionen, beim Einfangen von schwefelhaltigen Derivaten, beim Einfangen von schlechten Gerüchen.
